# FASCICULE DE BREVET EUROPEEN

(11) **EP 2 755 739 B1**
(45) Date de publication et mention de la délivrance du brevet: **11.03.2020**
(21) Numéro de dépôt: 11776818.4
(22) Date de dépôt: 16.09.2011
(51) Int. Cl.: B01D 33/21, B01D 33/48, B01D 33/80

(54) **DISPOSITIF DE RÉDUCTION DU FROTTEMENT ENTRE DES PLAQUES D'ÉTANCHÉITÉ D'UNITÉS DE FILTRATION ET SON UTILISATION DANS UN PROCÈDE DE FILTRATION**
VORRICHTUNG ZUR VERMINDERUNG DER REIBUNG ZWISCHEN VERSIEGELUNGSPLATTEN VON FILTERUNGSEINHEITEN UND VERWENDUNG DAVON IN EINEM FILTRIERVERFAHREN
DEVICE FOR REDUCING FRICTION BETWEEN SEALING PLATES OF FILTRATION UNITS, AND USE THEREOF IN A FILTRATION METHOD

(43) Date de publication de la demande: 23.07.2014
(73) Titulaire: Gaudfrin, 78100 Saint Germain en Laye (FR)
(72) Inventeur: GAUDFRIN, Guy, F-78860 Saint Nom la Breteche (FR)
(74) Mandataire: Alatis
(86) Numéro de dépôt international: PCT/FR2011/052137
(87) Numéro de publication internationale: WO 2013/038069

(56) Documents cités:
- US-A- 2 352 330
- US-A- 2 555 367
- US-A- 3 471 027

## Description

La présente invention concerne une unité de filtration pourvue d'un dispositif pour la réduction du frottement entre des plaques d'étanchéité et son utilisation dans un procédé de filtration.

La présente invention se rapporte plus particulièrement à un dispositif pour l'ajustement de la pression de contact entre deux surfaces de l'unité de filtration, matérialisées respectivement par une première plaque portée par une des extrémités longitudinales d'un tambour rotatif et une seconde plaque portée par l'extrémité en regard d'un caisson fixe indéformable bloqué en rotation.

Une telle disposition se trouve, notamment, dans certaines installations de séparation liquide-solide sous vide ou sous pression. Ces installations comprennent généralement un tambour de grandes dimensions (diamètre parfois supérieur à 2m), renfermant des collecteurs internes et raccordé en périphérie à des secteurs filtrants formants une fois assemblés des disques. Ce tambour est entrainé en rotation grâce à un arbre motorisé monté sur des paliers et tournant à des vitesses allant jusqu'à plus de 5 tours par minute. Selon une variante de l'installation, le tambour ne porte pas de disques et la filtration est réalisée directement à la surface dudit tambour.

Au cours d'une rotation du tambour qui correspond à une opération élémentaire de séparation, les collecteurs sont mis successivement, sous vide (couramment -0.5 bar relatif) lors des phases de filtration et d'essorage, puis sous pression (couramment +0.2 bar relatif) lors de la phase de décollement des gâteaux de matière solide qui se sont accumulés sur les secteurs.

Ainsi, dans ce type d'installation industrielle, le tambour rotatif est équipé à l'une de ses extrémités d'une plaque dite d'usure pourvue d'orifices communiquant, au travers de lumières ménagées sur une plaque en regard dite de distribution, successivement lors du cycle de séparation, avec un circuit d'aspiration et un circuit de soufflage branchés sur le caisson fixe.
Plus précisément, les faces planes des deux plaques sont en contact pour assurer l'étanchéité du système et, lors de la rotation du tambour, les orifices de la plaque d'usure passent successivement devant les lumières de la plaque de distribution.

Du fait, notamment, du vide généré par le circuit d'aspiration dans le caisson fixe et les collecteurs internes du tambour en phase de filtration, les plaques d'usure et de distribution sont soumises à une force pressante conduisant à les appliquer l'une contre l'autre et à établir une pression de contact assurant une étanchéité périphérique et centrale mais générant un frottement important entre les surfaces des plaques en vis à vis.

Cette force pressante est fonction du rapport entre la surface pressante et la surface pressée qui est dans ce domaine de l'ordre de 3 à 4, étant entendu que les surfaces en contact des plaques sont principalement les parties pleines en périphérie et au centre pour assurer l'étanchéité du système avec l'extérieur, ainsi que les parties pleines entre les orifices et les lumières.

Dans le cadre de la filtration sous pression, le système de filtration se retrouve placé dans une enceinte pressurisée. La différence de pression entre l'extérieur et l'intérieur de l'ensemble formé par le caisson et le tambour peut être jusqu'à 20 fois supérieure à celle du système sous vide. La pression de contact entre les plaques sera donc augmentée proportionnellement.

L'évolution des besoins de filtration et notamment la demande des industriels pour des capacités de traitement plus importantes, entraine, d'une part, une augmentation des tailles des installations de séparation solide-liquide et donc du diamètre des plaques, et d'autre part, pour améliorer la productivité, les vitesses de rotation tendent à augmenter. Au vu de la description du système, il est clair que plus les dimensions, la vitesse de rotation et le niveau de vide sont grands, plus le frottement entre les plaques est important et, par voie de conséquence, plus leur usure est rapide.

En outre, plus le frottement entre les plaques est important plus le couple et la puissance nécessaires à l'entraînement du tambour sont élevés ce qui pose des problèmes énergétiques.

Typiquement, si le niveau de vide dans le collecteur lors d'une filtration sous vide est d'environ -0,5 bar relatif, la pression de contact atteindra au moins 1,2 bars. Dans le cas de la filtration sous pression, la pression de l'air autour du caisson et du tambour peut être supérieure à 6 bars relatif, la pression intérieure au caisson et au tambour étant égale à la pression atmosphérique, la pression de contact atteindra alors plus de 18 bars.

**Le** US 2353330 **décrit une unité de filtration comprenant une plaque d'usure venant en contact d'appui contre une seconde plaque montée en regard sur l'extrémité extérieure d'un caisson bloqué en rotation et susceptible de se déplacer en translation. Cependant, les deux plaques sont entraînées en rotation relative et sont ici soumises à des forces axiales destinées à les rapprocher en compensant les forces générées par un différentiel de pression entre l'intérieur du caisson et l'extérieur, qui tendent à les écarter l'une de l'autre. Par conséquent, ce document préconise de rapprocher et de renforcer le contact entre les plaques ce qui augmente le frottement.**

La présente invention a pour but de résoudre les problèmes techniques **posés par l'art antérieur** de manière satisfaisante et efficace en proposant une solution permettant de réduire la pression de contact entre les plaques **pour réduire le frottement et** sans rompre l'étanchéité de leur liaison.

Ce but est atteint selon l'invention au moyen d'une unité de filtration selon la revendication 1.

Grâce au système de traction, l'unité de filtration de l'invention permet ainsi de compenser au moins partiellement les forces axiales pressant les deux plaques l'une contre l'autre.

Selon une caractéristique avantageuse, ledit système de traction est asservi à la différence de pression entre l'intérieur et l'extérieur de l'ensemble formé par le tambour et le caisson.

De façon avantageuse, ledit caisson comporte des conduits latéraux équipés d'embouts flexibles de raccordement aux circuits d'aspiration et de soufflage pour éviter des contraintes non-contrôlées sur le caisson.

Selon encore une autre caractéristique, ledit caisson est pourvu d'un manchon central monté autour dudit arbre rotatif et, d'autre part, de moyens de blocage en rotation.

Selon une variante, ledit système de traction est monté en appui sur le palier fixe supportant ledit arbre rotatif ou sur un bâti fixe.

Selon une autre variante, ledit système de traction comprend au moins un vérin pneumatique susceptible de produire des forces de sens contraire auxdites forces axiales.

Dans ce cas, pour un filtre sous vide, ledit vérin est monté de façon coaxiale dans le prolongement dudit arbre rotatif et applique un effort sur une plaque centrale nervurée assurant la liaison avec des tirants raccordés au caisson et parallèle audit arbre.

De préférence, ledit caisson peut coulisser sur ledit arbre rotatif pour permettre le contact d'appui de la plaque de distribution sur la plaque d'usure, quelle que soit la perte d'épaisseur de ladite plaque d'usure durant le fonctionnement.

L'unité de filtration de l'invention permet d'offrir un réglage précis de la pression de contact entre les plaques et ainsi de réduire les forces de frottement au minimum. Il en résulte une moindre usure de la plaque du caisson.

La régulation et la stabilité de la pression de contact entre les plaques peuvent être assurées selon l'invention grâce à l'asservissement de l'effort exercé par le système de traction sur le caisson à la différence de pression entre l'intérieur et l'extérieur de l'ensemble formé par le tambour et le caisson, le cas échéant, en y associant des organes de démultiplication tels que des bras de levier.

Selon une caractéristique avantageuse, cet asservissement est effectué pour la filtration sous vide ou sous pression en mettant en communication au moyen de conduits les chambres du vérin, ou des vérins s'il y en a plusieurs, du système de traction avec l'air intérieur et extérieur à l'ensemble formé par le tambour et le caisson. L'effort fournit par le vérin sera alors proportionnel à la différence de pression.

L'utilisation de l'unité de filtration de l'invention dans le cadre d'un procédé de séparation liquide-solide, en particulier en mode de fonctionnement asservi, permet une augmentation optimale de la taille et de la capacité des unités de filtration industrielle sans que n'apparaissent de problèmes supplémentaires de maintenance au niveau des éléments mobiles et tout en maitrisant les couples d'entrainement.

L'invention sera mieux comprise à la lecture de la description qui va suivre, accompagnée des dessins sur lesquels ;
La figure 1 représente une vue en perspective éclatée d'un mode de réalisation de l'unité de filtration de l'invention sur un filtre à disques sous vide avec un vérin à onde fonctionnant sous pression.
La figure 2 représente une vue en perspective du mode de réalisation de la figure 1 en position assemblée.
La figure 3 représente une vue en coupe latérale du mode de réalisation des figures 1 et 2.
La figure 4 représente une vue en perspective d'un autre mode de réalisation de l'unité de filtration de l'invention permettant d'asservir précisément et sans instrument de mesure la force exercée par le système de traction au niveau de vide d'un filtre à disques sous vide.
La figure 5 représente une vue en perspective d'une coupe latérale du mode réalisation de la figure 4.
La figure 6 représente une vue schématique du mode de réalisation de l'unité de filtration de l'invention avec un filtre à disque sous pression dont le système de traction comprend trois vérins pneumatiques de petit diamètre.
La figure 7 représente une vue schématique d'une variante du mode de réalisation de la figure 7 avec un seul vérin pneumatique de petit diamètre exerçant la même force de traction sur le caisson au moyen d'un bras de levier.

L'unité de filtration de l'invention telle que représentée sur les différentes figures permet un réglage de la pression de contact entre deux surfaces portées respectivement par un tambour rotatif 1 (représenté partiellement sur les figures) et un caisson 2 monté dans le prolongement longitudinal du tambour 1.

Le caisson 2 est bloqué en rotation tout en conservant la possibilité de coulisser le long de l'arbre moteur 3.

L'arbre moteur 3 est solidaire du tambour 1 en étant fixé ici à un moyeu central 13.

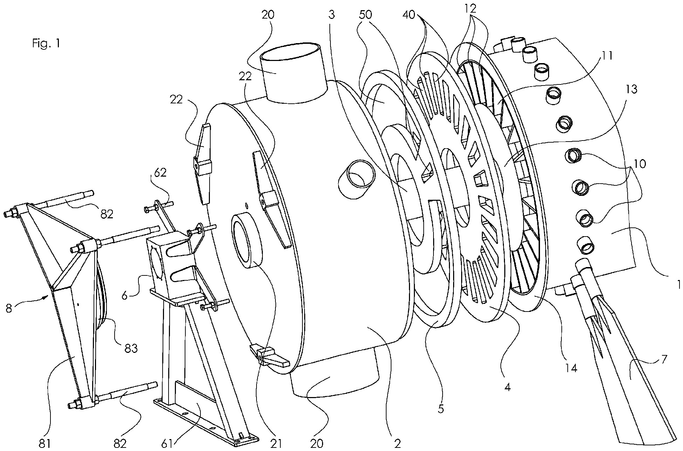

Le tambour 1 porte, dans ce mode de réalisation, des disques formés de secteurs filtrants 7 raccordés au tambour 1 par des tubulures 10. Seuls deux secteurs filtrants 7 ont été représentés sur les figures 1, 2 et 4.

Le volume intérieur du tambour 1 est scindé en de multiples compartiments formant les collecteurs 11 qui sont destinés à récupérer le filtrat.
Les collecteurs sont ici séparés par des cloisons intérieures radiales 12.
Lors de la phase de filtration du cycle de séparation, les collecteurs 11 sont mis en dépression puis, inversement, lors de la phase de décolmatage des secteurs 7, les collecteurs sont mis en surpression pour décoller les gâteaux de matière solide qui se sont déposés précédemment. Ce cycle est généralement mis en œuvre lors d'un tour complet du tambour 1.

A l'une des extrémités longitudinales des collecteurs 11 du tambour 1 est positionnée une plaque cylindrique 4 dite d'usure (car susceptible de perdre de l'épaisseur et donc d'être remplacée) dont l'épaisseur est ici de quelques centimètres. La plaque 4 prend appui sur le champ des cloisons 12 et est fixée de manière amovible sur une bride 14 elle-même portée par la périphérie du tambour 1.

La plaque 4 est pourvue d'orifices 40 ménagés sur sa surface et positionnés en regard de chaque collecteur 11 comme illustré par la figure 1.

Le caisson 2 comporte un manchon central 21 monté de façon coaxiale sur l'arbre moteur 3 qui le supporte.
Le caisson est immobilisé par des moyens de blocage en rotation (par exemple du type butoirs, non représentés), il est prévu que le manchon 21 puisse néanmoins coulisser le long de l'arbre 3 sur une course de l'ordre de quelques centimètres.

Le caisson 2 reçoit, sur sa paroi latérale en regard du tambour 1, une plaque cylindrique rapportée 5 dite de distribution car mettant en communication les collecteurs 11 de l'arbre alternativement avec des circuits en dépression et en surpression par rapport à la pression régnant à l'extérieur de l'ensemble formé par le caisson 2 et le tambour 1.

Les tiges 62, liées au palier 6 par des lamelles ressort, poussent sur le caisson 2 pour pré-appliquer la plaque 5 contre la plaque 4 avant le démarrage du procédé de filtration.

La plaque 5 est pourvue de lumières 50. Dans le cas de la filtration sous vide, figure 1 à 5, ces lumières 50 sont les sorties des circuits d'aspiration et de soufflage (non représentés) destinés à établir respectivement et successivement une dépression et une surpression dans les collecteurs 11 du tambour.

Le caisson 2 comporte, en outre, des conduits latéraux 20 susceptibles d'être équipés d'embouts flexibles (non représentés) pour le raccordement aux circuits d'aspiration et de soufflage et débouchant dans les deux chambres partageant le volume intérieur du caisson 2 et communiquant, via les lumières 50 de la plaque 5 et les orifices 40 de la plaque 4, avec les collecteurs 11 du tambour 1.

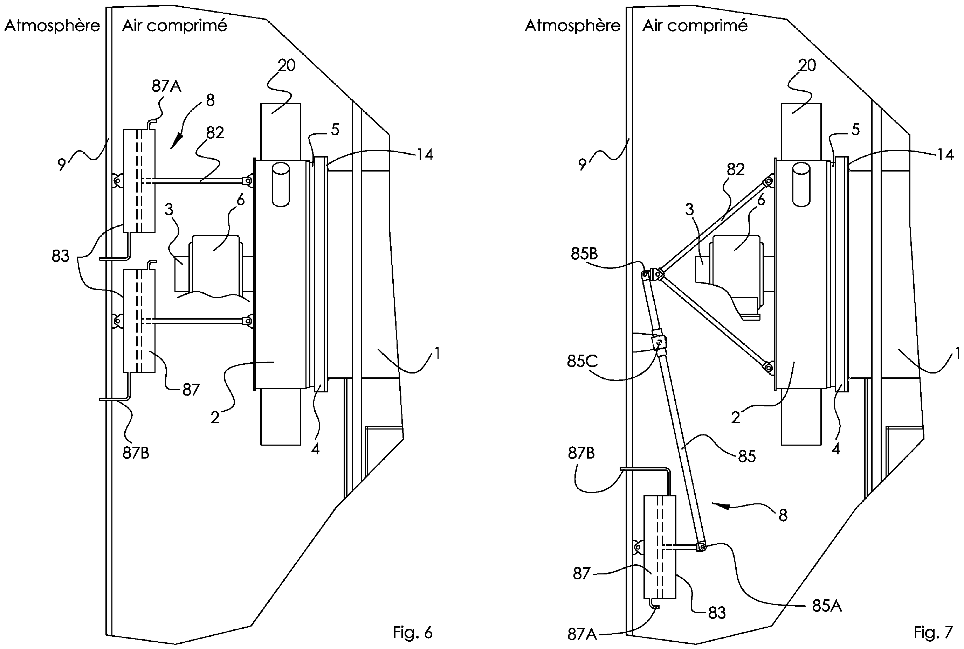

Pour la variante de la filtration sous pression, représentée sur les figures 6 et 7, le circuit d'aspiration décrit précédemment est remplacé par un circuit de mise à pression atmosphérique de l'intérieur de l'ensemble formé par le tambour 1 et le caisson 2, assurant la différence de pression avec l'air comprimé d'une enceinte pressurisée 9.

Lors de la phase de filtration, sous l'effet de la différence de pression entre l'intérieur et l'extérieur de l'ensemble formé par le caisson 2 et le tambour 1, la plaque 5 et le caisson 2, libres de coulisser sur l'arbre, sont soumis à des forces pressantes axiales dirigées vers la plaque 4 et le tambour rotatif en vis à vis.

Ces forces dont l'intensité est proportionnelle à la différence de pression entre l'intérieur et l'extérieur de l'ensemble formé par le caisson et le tambour, provoquent un appui pressant et étanche de la plaque fixe 5 contre la plaque en rotation 4. Il en résulte un frottement important entre les plaques 5 et 4, lui-même proportionnel à la pression de contact et donc à la différence de pression.

Pour réduire ce frottement, l'invention prévoit d'utiliser au moins un système de traction agissant sur le caisson 2, indéformable, et donc sur la plaque de distribution 5 en exerçant une force destinée à compenser au moins partiellement les forces axiales qui pressent la plaque de distribution 5 sur la plaque d'usure 4. Le système de traction réduit ainsi la pression de contact entre les plaques et donc le frottement tout en assurant le maintien d'un contact mutuel étanche.

Dans le cas de la filtration sous vide, figures 1 à 5, le système de traction est monté sur le palier 6 de l'arbre moteur 3 soutenu par le bâti fixe 61.

Le système de traction 8 représenté sur les figures 1 à 3 comprend au moins un vérin 83 ici pneumatique ou, selon une autre variante, un vérin hydraulique ou encore un ressort, susceptible de produire des forces de sens contraire aux forces pressant la plaque de distribution 5 sur la plaque d'usure 4.

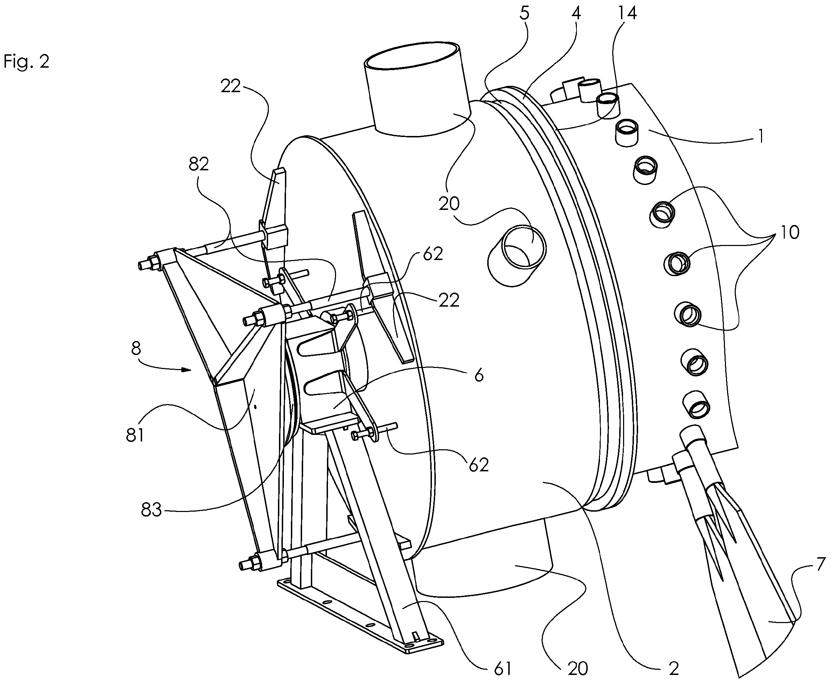

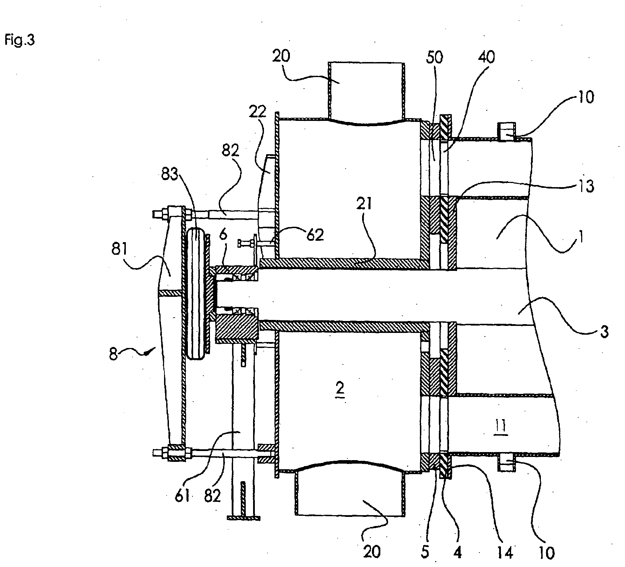

Sur les figures 1 à 3, le vérin 83 est monté sur le palier 6 de façon coaxiale dans le prolongement de l'arbre rotatif 3 et applique un effort sur une plaque centrale nervurée 81 assurant la liaison avec des tirants 82 parallèles à l'arbre 3 et dont les extrémités sont raccordées à la paroi latérale extérieure du caisson 2 renforcée localement par des goussets 22, comme représenté sur les figures 2 et 3.

De préférence, l'effort exercé par le vérin 83 est asservi au niveau de régnant dans le volume intérieur du caisson 2 et des collecteurs 11 du tambour 1 de façon à obtenir un ajustement automatique, fin et optimal de la pression de contact entre les plaques quelles que soient les variations du niveau de dépression provoquées par les changements de régime des circuits de vide.

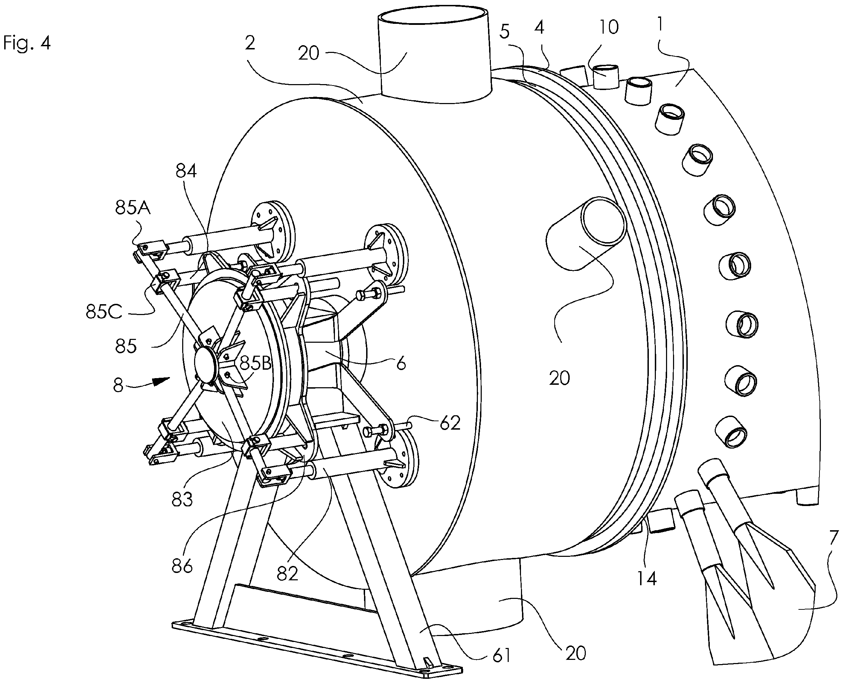

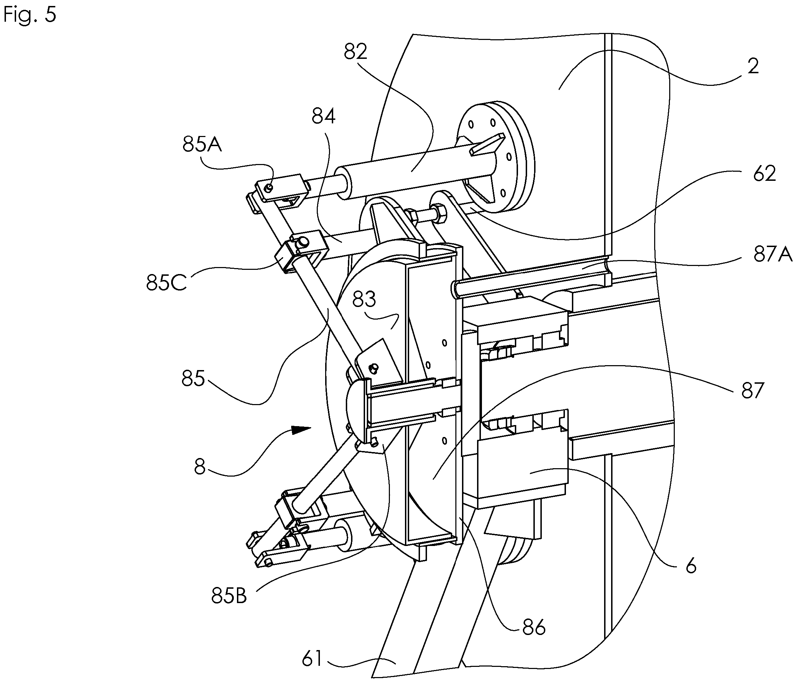

Selon une variante représentée sur les figures 4 et 5, on cherche à obtenir un asservissement parfaitement proportionnel au niveau de vide de fonctionnement de l'effort exercé par le vérin 83. Pour cela, la chambre 87 du vérin pneumatique 83, représentée sur la figure 5, est mise en communication avec l'intérieur du caisson 2 au moyen d'un conduit 87A. Le piston du vérin 83, soumis au vide de fonctionnement, tire sur des bras de levier 85 de façon proportionnelle audit vide. L'effort fournit par le vérin 83 est transmis par le bras de levier 85 aux tirants 82, ce qui permet d'exercer une traction, asservie continuellement au vide, sur le caisson 2 et donc sur la plaque 5.

Lesdits bras de leviers 85 sont liés au piston du vérin 83 par les liaisons pivots glissants 85B et aux tirants 82 par les liaisons pivots 85A. L'effort transmis par le levier dépend de la position de la liaison pivot glissant 85C entre le bras de levier 85 et la colonne d'appui du levier 84. En réglant la position de la colonne d'appui du levier 84 portée par la base 86 du vérin 83, elle-même montée sur le palier 6, on pourra ajuster la force de traction exercée sur le caisson 2 et donc sur la plaque 5.

L'effet des bras leviers 85 multiplie l'effort fourni par le vérin 83 de façon suffisante pour compenser l'action du vide sur la plaque 5 avec un vérin 83 de petite taille relativement à la taille du caisson 2.

Selon une autre variante, représentée sur les figures 6 et 7, la filtration est effectuée sous pression et l'effort exercé par le système de traction 8 est asservi, précisément et sans instrument de mesure, à la différence de pression entre l'intérieur et l'extérieur de l'ensemble formé par le caisson 2 et le tambour 1. Le filtre comprend les mêmes éléments 1 à 7 que les filtres sous vide décrits précédemment mais se trouve enfermé dans une enceinte pressurisée 9.

Dans les cas représentés sur les figures 6 et 7, les chambres 87 des vérins pneumatiques 83 sont mises en communication d'une part avec l'air comprimé de l'enceinte pressurisée 9 à travers les conduits 87A et d'autre part avec l'air à pression atmosphérique à l'extérieur de l'enceinte 9 à travers les conduits 87B. De cette façon, l'effort fournit par les vérins 83 sera continuellement proportionnel à la différence de pression entre l'extérieur et l'intérieur de l'ensemble formé par le caisson 2 et le tambour 1.

Pour des raisons d'encombrement plusieurs vérins 83 de petites dimensions, relativement au caisson 2, seront généralement requis, tel que représenté sur la figure 6 où le système de traction comprend trois vérins 83. Sur la figure 6, les vérins 83 sont liés à la paroi de l'enceinte pressurisée 9 et leurs pistons sont raccordés aux tirants 82.

Dans ce cas, les trois vérins pneumatiques 83 seront de même dimension et soumis à la même différence de pression, ils fourniront donc un effort de traction identique qui permettra de compenser les forces pressantes axiales appliquant la plaque de distribution 5 contre la plaque d'usure 4.

Selon une autre configuration du système de traction présentée sur la figure 7, un seul vérin pneumatique 83 de petites dimensions relativement au caisson 2, fournira, en poussant sur un bras de levier 85 au niveau de la liaison pivot 85B, l'effort de traction nécessaire sur la liaison pivot 85A du bras de levier 85 avec les tirants 82 pour compenser les forces pressantes appliquant la plaque de distribution 5 sur la plaque d'usure 4.

Dans cette configuration, Le réglage de la position du support de la liaison pivot glissant 85C permettra d'ajuster l'effort exercé par le système de traction sur le caisson 2.

## Revendications

1. Unité de filtration comprenant une première plaque (4) portée par l'extrémité longitudinale d'un tambour (1) solidaire d'un arbre rotatif (3) monté sur un palier (6) et présentant des collecteurs internes (11) et une seconde plaque (5) montée en regard de la première plaque sur l'extrémité extérieure d'un caisson (2) bloqué en rotation et susceptible de se déplacer en translation en étant supporté par ledit arbre, les deux plaques (4, 5) étant entraînées en rotation relative en étant soumises à des forces pressantes axiales dues à un différentiel de pression entre l'intérieur de l'ensemble formé par le tambour (1) et le caisson (2) et l'extérieur, **caractérisée en ce qu'**elle comprend au moins un système de traction (8) exerçant sur le caisson (2) une force de sens opposé aux dites forces pressantes axiales entre lesdites première (4) et seconde (5) plaques pour réduire le frottement entre lesdites plaques tout en assurant le maintien de leur contact mutuel étanche.

2. Unité de filtration selon la revendication 1, **caractérisée en ce que** lesdites plaques (4, 5) sont pourvues respectivement, pour la première (4), d'orifices (40) de communication avec les collecteurs (11) du tambour (1) et, pour la seconde (5), de lumières (50) correspondant aux circuits d'aspiration et de soufflage destinés à établir une dépression/surpression dans les collecteurs (11) du tambour (1) par rapport à la pression extérieure au tambour (1).

3. Unité de filtration selon la revendication 2, **caractérisée en ce qu'**il comprend des moyens d'asservissement de l'effort fourni par ledit système de traction (8) au différentiel de pression entre l'intérieur et l'extérieur de l'ensemble formé par le caisson (2) et le tambour (1).

4. Unité de filtration selon l'une des revendications précédentes, **caractérisée en ce que** ledit caisson (2) comporte des conduits latéraux (20) équipés d'embouts flexibles de raccordement aux circuits d'aspiration et de soufflage.

5. Unité de filtration selon l'une des revendications précédentes, **caractérisée en ce que** ledit caisson (2) est pourvu, d'une part, d'un manchon central (21) pouvant coulisser autour dudit arbre rotatif (3) et, d'autre part, de moyens de blocage en rotation.

6. Unité de filtration selon l'une des revendications précédentes, **caractérisée en ce que** ledit système de traction (8) comprend au moins un vérin (83) pneumatique susceptible de produire une force transmise à des tirants (82) en vue d'être exercée sur ledit caisson (2) en sens contraire auxdites forces pressantes axiales.

7. Unité de filtration selon l'une des revendications précédentes, **caractérisée en ce que** système de traction (8) est monté sur le palier (6) dudit arbre rotatif (3).

8. Unité de filtration selon les revendications 6 et 7, **caractérisée en ce que** ledit vérin (83) est monté de façon coaxiale dans le prolongement dudit arbre rotatif (3) et exerce un effort sur une plaque centrale nervurée (81) assurant la liaison avec les tirants (82) parallèles audit arbre dont l'extrémité est raccordée audit caisson (2).

9. Unité de filtration selon l'une des revendications 6 ou 7, **caractérisée en ce qu'**il comprend des bras de levier (85) destinés à transmettre l'effort fourni par le vérin (83) du système de traction (8) aux tirants (82) afin de minimiser le diamètre du vérin (83).

10. Utilisation de l'unité de filtration selon l'une des revendications 6,7 ou 9 pour la filtration sous vide, **caractérisée en ce qu'**une chambre (87) du vérin pneumatique (83) dudit système de traction (8) est mise en communication avec le caisson (2) sous vide à travers un conduit (87A), asservissant précisément et continuellement l'effort fourni par le vérin (83) au niveau de vide à l'intérieur du caisson (2).

11. Utilisation de l'unité de filtration selon l'une des revendications 6 ou 9 pour la filtration sous pression, **caractérisée en ce que** la chambre (87) du ou des vérins pneumatiques (83) du système de traction (8) sont mises en communication, d'une part, avec l'air comprimé d'une enceinte pressurisée (9) à travers des conduits (87A) et, d'autre part, avec l'air à pression atmosphérique à l'extérieur de ladite enceinte (9) à travers des conduits (87B) asservissant précisément et continuellement l'effort fourni par les vérins (83) à la pression régnant à l'intérieur de ladite enceinte (9).

## Patentansprüche

1. Filtereinheit, die eine erste Platte (4) umfasst, die vom Längsende einer Trommel (1), die mit einer auf ein Lager (6) montierten rotierenden Welle (3) fest verbunden ist und interne Kollektoren (11) aufweist, getragen wird, und eine zweite Platte (5), die gegenüber der ersten Platte am äußeren Ende eines drehfesten Kastens (2) montiert ist, und sich abgestützt durch die Welle translatorisch bewegen kann, wobei die beiden Platten (4), 5) relativ zueinander gedreht werden, indem sie axialen Druckkräften ausgesetzt sind, die auf eine Druckdifferenz zwischen dem Innenbereich der durch die Trommel (1) und den Kasten (2) gebildeten Anordnung und dem Außenbereich hervorgerufen wird, **dadurch gekennzeichnet, dass** sie mindestens ein Antriebssystem (8) umfasst, das auf den Kasten (2) eine den axialen Druckkräften entgegengesetzte Kraft zwischen der ersten (4) und der zweiten (5) Platte ausübt, um die Reibung zwischen den Platten zu verringern und gleichzeitig ihren dichten gegenseitigen Kontakt aufrecht zu erhalten.

2. Filtereinheit nach Anspruch 1, **dadurch gekennzeichnet, dass** die erste Platte (4) mit Verbindungsöffnungen (40) zu den Sammlern (11) der Trommel (1) versehen ist, und die zweite (5) mit Aussparungen (50) für die Saug- und Gebläsekreise, die den Unter-/Überdruck in den Sammlern (11) der Trommel (1) in Bezug auf den Außendruck der Trommel (1) erzeugen.

3. Filtereinheit nach Anspruch 2, **dadurch gekennzeichnet, dass** sie Mittel zur Steuerung der Kraft umfasst, die das Antriebssystem (8) zur Druckdifferenz zwischen der Innenseite und der Außenseite der durch den Kasten (2) und die Trommel (1) gebildeten Anordnung übermittelt.

4. Filtereinheit nach einem der vorhergehenden Ansprüche, **dadurch gekennzeichnet, dass** der Kasten (2) seitliche Leitungen (20) umfasst, die mit flexiblen Anschlussstutzen für den Saug- und den Gebläsekreis ausgestattet sind.

5. Filtereinheit nach einem der vorhergehenden Ansprüche, **dadurch gekennzeichnet, dass** der Kasten (2) zum einen mit einer mittigen Muffe (21) versehen ist, die um die rotierende Welle (3) gleiten kann, und zum anderen mit Mitteln zum Blockieren der Drehung.

6. Filtereinheit nach einem der vorhergehenden Ansprüche, **dadurch gekennzeichnet, dass** das Antriebssystem(8) mindestens einen Pneumatikzylinder (83) umfasst, der eine auf Zugstangen (82) übertragene Kraft erzeugen kann, damit diese in einer den axialen Druckkräften entgegengesetzten Richtung auf den Kasten (2) ausgeübt werden kann.

7. Filtereinheit nach einem der vorhergehenden Ansprüche, **dadurch gekennzeichnet, dass** das Antriebssystem (8) auf das Lager (6) der rotierenden Welle (3) montiert ist.

8. Filtereinheit nach den Ansprüchen 6 und 7, **dadurch gekennzeichnet, dass** der Zylinder (83) koaxial in der Verlängerung der rotierenden Welle (3) montiert ist und eine Kraft auf eine zentrale Rippenplatte (81) ausübt, welche die Verbindung mit den parallel zur Welle, deren Ende mit dem Kasten (2) verbunden ist, verlaufenden Zugstangen (82) herstellt.

9. Filtereinheit nach einem der Ansprüche 6 oder 7, **dadurch gekennzeichnet, dass** sie Hebelarme (85) zum Übertragen der vom Zylinder (83) des Antriebssystems (8) erzeugten Kraft an die Zugstangen (82) umfasst, um den Durchmesser des Zylinders (83) zu minimieren.

10. Verwendung der Filtereinheit nach einem der Ansprüche 6, 7 oder 9 zur Vakuumfiltration, **dadurch gekennzeichnet, dass** eine Kammer (87) des Pneumatikzylinders (83) des Antriebssystems (8) über eine Leitung (87A), welche die vom Zylinder (83) gelieferte Kraft in Höhe des Vakuums im Innern des Kastens (2) präzise und kontinuierlich reguliert, mit dem Vakuumkasten (2) verbunden ist.

11. Verwendung der Filtereinheit nach einem der Ansprüche 6 oder 9 für die Druckfiltration, **dadurch gekennzeichnet, dass** die Kammer (87) des oder der Pneumatikzylinder (83) des Antriebssystems (8) einerseits über Leitungen (87A) mit der Druckluft eines Druckgehäuses (9), und andererseits über Leitungen (87B), welche die von den Zylindern (83) zugeführte Kraft auf dem im Gehäuse (9) herrschenden Druck präzise und kontinuierlich halten, mit der Luft bei atmosphärischem Druck außerhalb des Gehäuses (9) verbunden ist.

## Claims

1. A filtration unit comprising a first plate (4) being carried by the longitudinal end of a drum (1) integral with a rotary shaft (3) mounted on a bearing (6) and having internal manifolds (11) and a second plate (5) mounted opposite the first plate on the outer end of a box (2) blocked in rotation and capable of moving in translation by being supported by said shaft, the two plates (4, 5) being driven in relative rotation by being subjected to axial pressing forces caused by a pressure difference between the inside of the assembly formed by the drum (1) and the box (2) and the outside, **characterized in that** it comprises at least one traction system (8) acting on the box (2) by exerting a force having a direction opposite said axial pressing forces between said first (4) and second (5) plates to reduce friction between said plates while maintaining a tight mutual contact thereof.

2. A filtration unit according to claim 1, **characterized in that** said plates (4, 5) are provided respectively, for the first one (4), with orifices (40) for communication with the manifolds (11) of the drum (1) and, for the second one (5), with holes (50) corresponding to the suction and blowing circuits intended for establishing a vacuum/overpressure in the manifolds (11) of the drum (1) relative to the pressure outside the drum (1).

3. A filtration unit according to claim 2, **characterized in that** it comprises means for servocontrolling the force provided by said traction system (8) to the pressure difference between the inside and the outside of the assembly formed by the box (2) and the drum (1).

4. A filtration unit according to one of the preceding claims, **characterized in that** said box (2) comprises lateral conduits (20) equipped with flexible connecting ends for connection to the suction and blowing circuits.

5. A filtration unit according to one of the preceding claims, **characterized in that** said box (2) is provided, on the one hand, with a central sleeve (21) slidable about said rotary shaft (3) and, on the other hand, with rotation locking means.

6. A filtration unit according to one of the preceding claims, **characterized in that** said traction system (8) comprises at least one pneumatic cylinder (83) capable of producing a force transmitted to tie rods (82) in order to be exerted on said box (2) in a direction opposite said axial pressing forces.

7. A filtration unit according to one of the preceding claims, **characterized in that** the traction system (8) is mounted on the bearing (6) of said rotary shaft (3).

8. A filtration unit according to claims 6 and 7, **characterized in that** said cylinder (83) is mounted coaxially as an extension of said rotary shaft (3) and exerts a force on a ribbed central plate (81) ensuring the connection with the tie rods (82) parallel to said shaft, the end of which is connected to said box (2).

9. A filtration unit according to one of claims 6 or 7, **characterized in that** it comprises lever arms (85) intended for transmitting the force supplied by the cylinder (83) of the traction system (8) to the tie rods (82) in order to minimize the diameter of the cylinder (83) .

10. Use of the filtration unit according to one of claims 6, 7 or 9 for a vacuum filtration, **characterized in that** a chamber (87) of the pneumatic cylinder (83) of said traction system (8) is communicating with the vacuum box (2) through a conduit (87A), precisely and continuously servocontrolling the force supplied by the cylinder (83) at the vacuum level inside the box (2).

11. Use of the filtration unit according to one of claims 6 or 9 for a pressure filtration, **characterized in that** the chamber (87) of the pneumatic cylinder (s) (83) of the traction system (8) are communicating, on the one hand, with the compressed air of a pressurized enclosure (9) through conduits (87A) and on the other hand, with the air at atmospheric pressure outside said enclosure (9) through conduits (87B) precisely and continuously servocontrolling the force supplied by the cylinders (83) at the pressure prevailing inside said enclosure (9).
